# EUROPEAN PATENT SPECIFICATION

(11) **EP 1 612 530 B1**
(45) Date of publication and mention of the grant of the patent: **22.08.2007**
(21) Application number: 05447163.6
(22) Date of filing: 04.07.2005
(51) Int. Cl.: G01K 17/00, G01N 25/48

(54) **Disposable sample carrier for use with thermal sensors**
Wegwerfprobenträger für Verwendung mit thermischen Sensoren
Porte-échantillon jetable pour utilisation avec des capteurs thermiques

(30) Priority: 02.07.2004 US 585170 P
(43) Date of publication of application: 04.01.2006
(73) Proprietor: Vivactis NV, 3001 Leuven (BE)
(72) Inventor: Verhaegen, Katarina, 3060 Berten (BE); De Vries, Atze-Cees, 5707 Seengen (CH)
(74) Representative: Bird, Ariane

(56) References cited:
- WO-A-03/036280
- US-A- 4 095 453
- US-B1- 6 193 413

## Description

### Technical field of the invention

The present invention relates to disposable sample carriers to be used with thermal sensors for forming a thermal sensor system as well as methods of using disposable carriers with thermal sensors.

### Background of the invention

A number of different types of thermal or temperature sensors exist. Two of the most common types are thermocouples and thermoresistors or thermistors.

In a thermocouple sensor the measurement of temperature is realised by what is known as the Seebeck effect, the physics of which is rather complicated. The basic idea of this Seebeck effect is that when two dissimilar materials, for example two dissimilar metals (e.g. copper and iron) are brought together in a circuit, and the junctions are held at different temperatures, then a small voltage is generated and an electrical current flows between them. The potential created by the temperature difference in the materials is measured by a voltmeter. The magnitude of the potential depends on the temperature difference of the two junctions and the composition of the materials.

A thermoresistor measures the temperature by measuring the change in electrical resistance that occurs in a material, e.g. a metal, as it heats up. The electrical resistance of materials such as metals varies with their temperature. Therefore, the temperature can be measured by measuring the resistance of a piece of such a material. The main benefits of thermocouples and thermoresistors are that they are easy to isolate thermally from the remainder of a measurement device, which means not only a more accurate temperature measurement but also a faster response to changes in temperature.

One of the more interesting applications of thermal sensors is that they can be used for measuring fluid flow. The basic concept behind these sensors is that the volume flow rate of a fluid, i.e. how much volume flows past a predetermined point in a small interval of time, can be measured by heating the flow and measuring the dissipation of heat in the flow. An example of a thermal sensor that can be used for these applications is a calorimetric flow sensor. It works by measuring the temperature of the fluid at a first point, heating the fluid at a second point, and then re-measuring the temperature of the fluid at a third point. If the fluid flows fast, the temperature at the third point will be higher than the temperature at the first point. If the fluid is flowing slowly, the heat will be more evenly distributed in the fluid and the measured temperature difference between the two sensors will be smaller.

In the above-described thermal sensors the fluid to be measured is in direct contact with the sensor and can contaminate the sensor. Therefor, these sensors have to be cleaned after each measurement.

WO 03/036280 describes an electro thermometric apparatus comprising a container for receipt of a sample and an electro thermometer associated with the container for measuring the temperature of the sample, wherein, in use, the electro thermometer does not contact the sample. The container can be a microtitre plate and this microtitre plate is generally of a disposable nature. The microtitre plate is on top of the pt resistor which forms the electro thermometer. However, in between measurements, the microtitre plate has to be removed and be replaced by another microtitre plate or by the same microtitre plate filled with other samples. This all takes time and efforts.

US 4,095,453 describes a differential thermal analyzer or calorimeter comprising a thermoelectric disc with raised sample platforms and reference platforms. These platforms support a disposable sample capsule, holder or cup and a reference capsule, holder or pan. The capsules are typically small aluminum cups which may be disposed after a measurement is performed. The differential thermal analyzer of US 4,095,453 furthermore comprises discs positioned under the sample and reference platforms so that, even when the sample holders do not make constant or uniform contact at any portion of the surface, due to the averaging effects of the total surface area, reproducibility of the measurements performed by the differential thermal analyzer is assured. The sample holders are positioned on top of the platforms of the thermoelectric disc. Again, the cups have to be removed in between subsequent measurements and replaced by other cups. Again, this takes time and efforts.

### Summary of the invention

It is an object of the present invention to provide a thermal sensor system with improved properties. An advantage of the present invention is the provision of methods of using disposable carriers with thermal sensors.

The above objective is accomplished by a method and device according to the present invention.

The present invention provides a thermal sensor system comprising:
- a thermal sensor having a top surface, and
- a first disposable sample carrier, located on or above the top surface of the thermal sensor
wherein the thermal sensor furthermore comprises a take-up roll and a dispensing roll for providing a continuous system of providing and removing clean parts of first disposable sample carrier.

An advantage of the thermal sensor system according to the present invention is that no interruption is required in between two subsequent measurements. After a measurement, the first disposable sample carrier that has been used is moved toward the take-up roll while unused clean parts of the disposable sample carrier coming from the dispensing roll are provided at the location of the thermal sensor before performing another measurement. A further advantage of the thermal sensor according to the present invention is that it prevents cross-contamination of the thermal sensor as the sample to be measured is never in direct contact with the thermal sensor, but is in contact with the disposable sample carrier, which is removed after use. Furthermore, the thermal sensor system according to the present invention is cost effective, because the thermal sensor itself can be re-used after it has been used to perform a measurement, as only the sample carrier has to be removed in between two subsequent measurements.

According to embodiments of the invention, a distance d exists between the first disposable sample carrier and the top surface of the thermal sensor. The distance d may be between 0 and 400 µm. Preferably, the distance d may be between 0 and 200 µm, more preferably between 0 and 100 µm and most preferably between 0 and 10 µm. The smaller the distance d is, the better the sensitivity of the thermal sensor system becomes.

According to an embodiment of the invention, the distance d may be varied by means of spacers located in between the first disposable sample carrier and the top surface of the thermal sensor. In that case, the distance d between the first disposable sample carrier and the top surface of the thermal sensor may be varied by varying the height of the spacers.

In a preferred embodiment according to the invention, the first disposable sample carrier may be in direct contact with the top surface of the sample carrier. In this case, the sensitivity of the thermal sensor system does not significantly differ from the sensitivity of a thermal sensor without a sample carrier.

In embodiments of the invention, the thermal sensor system may furthermore comprise a second disposable sample carrier having a top surface. The first disposable sample carrier may also comprise a top surface and the second disposable sample carrier may be positioned with its top surface toward the top surface of the first disposable sample carrier. An advantage of these embodiments is that they allow mixing of different samples before or during measurements are performed and that they allow for thermal equilibrium to be established between two samples.

In another embodiment according to the invention, an intermediate foil may be present in between the first and second disposable sample carriers. For example, the intermediate foil may comprise pores and may allow partial mixing of samples before or during measurements and furthermore allows, besides for a thermal equilibrium, also for a chemical equilibrium to be established.

According to the invention, the thermal sensor system may furthermore comprise a dispenser means for dispensing samples onto the top surface of the first and/or second sample carrier. The dispensing means may be any suitable dispensing means known by a person skilled in the art.

The present invention also includes the use of disposable carriers for samples especially foil carriers with thermal sensors.

Particular and preferred aspects of the invention are set out in the accompanying independent and dependent claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 is a schematic illustration of a first embodiment of the present invention.
Fig. 2 is a schematic illustration of a second embodiment of the present invention.
Fig. 3 illustrates the set-up of the experiment used for producing the graph shown in Fig. 4.
Fig. 4 shows a comparison between signals obtained from samples directly on the chip, i.e. without a disposable sample carrier in between the sample and the sensor, and signals acquired with a thermal sensor system according to an embodiment of the invention.
Fig. 5 is a schematic illustration of a further embodiment of the present invention.
Fig. 6 illustrates a disposable microplate in top view and in cross-section.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

The present invention provides a thermal sensor system comprising a disposable sample carrier and a thermal sensor, such as a thermal detector and/or enthalpy chip and/or array. The thermal detector may, for example, be a thermopile junction, a diode, a thermistor or any other temperature dependent material or sensor. An idea behind the present invention is to provide disposable sample carriers that are put on or above the sensor chips, the sample carriers being of a material and with dimensions so that the thermal path between the sample and the thermal sensor is only changed to a small degree due to the use of the sample carrier, and that the sensitivity of the thermal sensor is not significantly changed or not changed at all. A purpose of the thermal sensor system according to the invention may be to measure heat exchange and/or metabolic activity in solutions comprising soluble species.

According to the invention, a sample carrier, e.g. a foil, is provided for being located on or above a thermal sensor. According to the invention, the sample carrier, e.g. foil, may be cut to shape before being put, for example manually or mechanically, on or above a top surface of the thermal sensor, but it may also be continuously rolled over the top surface of the thermal sensor. Depending on the application, the distance between the sample carrier, e.g. foil, and the sensor surface may be varied. Preferably, the sample carrier may be as close as possible to the thermal sensor (see further).

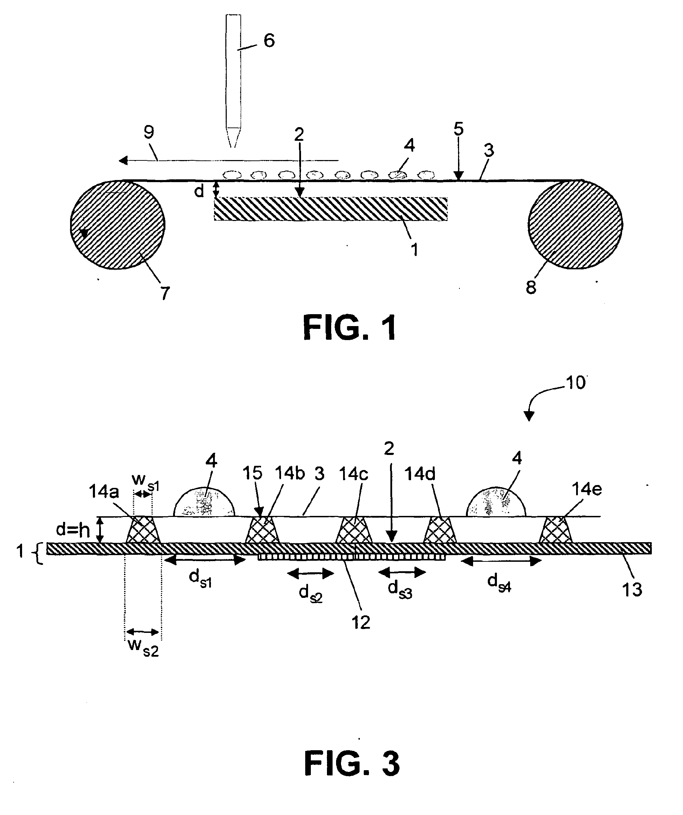

A thermal sensor system 10 according to a first embodiment of the invention is illustrated in Fig. 1. The thermal sensor system 10 comprises a thermal sensor 1 having a top surface 2. A sample carrier 3, e.g. a foil, is provided on or above the top surface 2 of the thermal sensor 1. The sample carrier 3, e.g. foil, may, for example, comprise a polymer and may have a thickness of 1 µm or more, 5 µm or more, 10 µm or more, 15 µm or more, 20 µm or more, 50 µm or more, e.g. in the range 1 to 50 µm, or 5 to 50 µm or 10 to 20µm. A suitable thickness of the sample carrier depends on the material used for the sample carrier, and on its thermal characteristics. The thickness of the sample carrier should be such that the thermal path between a sample and the thermal sensor is not substantially changed with respect to when no sample carrier would be present. For example, strong and thin polymer films of variable thickness suitable to be applied with the present invention are described in "Gossamer Spacecraft: membrane and inflatable structures and technology for space applications", C. H. M. Jenkins, American Institute of Aeronautics and Astronautics, vol. 191, 2001.

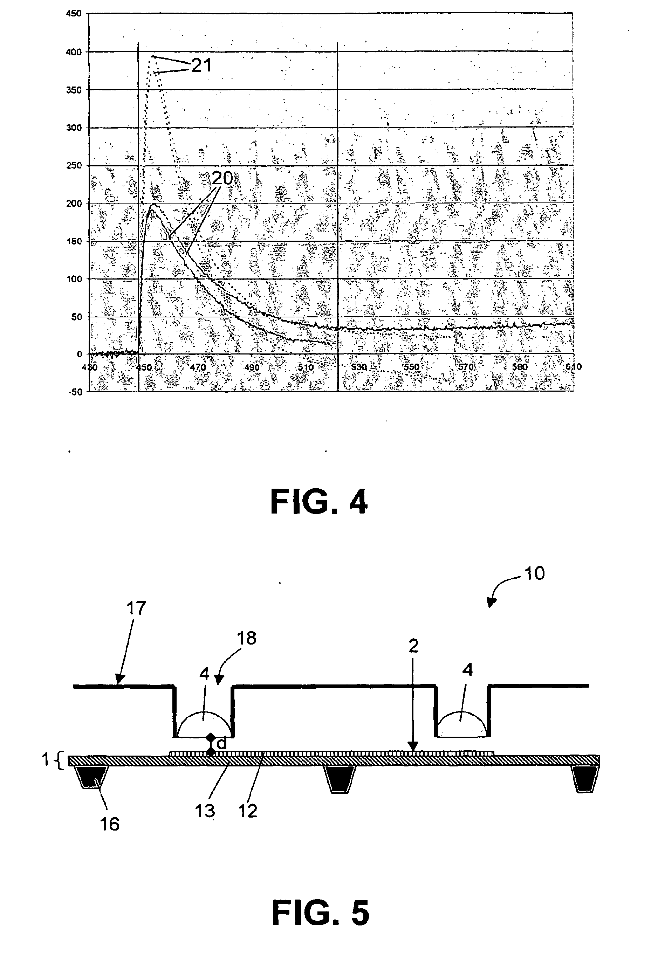

Depending on the required application, the distance d between the sample carrier 3 and the thermal sensor 1 may be varied. The distance d between the sample carrier 3, e.g. foil, and the top surface 2 of the thermal sensor 1 may be between 0 and 400 µm, preferably between 0 and 200 µm, more preferably between 0 and 100 µm and most preferably between 0 and 10 µm. In a preferred embodiment, when sensitivity is an important issue, the sample carrier 3, e.g. foil, may be in direct contact with the top surface 2 of the thermal sensor 1. In this case, a sensitivity comparable to the sensitivity of a thermal sensor without a foil can be obtained (see further). The distance d may be determined by the presence or absence of spacers (not shown in Fig. 1 but illustrated in Fig. 3) placed on the top surface 2 of the thermal sensor 1 and by the height of the spacers. When no spacers are present on the top surface 2 of the thermal sensor 1, the foil 3 will stick directly to that top surface 2 because of its electrostatic charge.

A sample 4 to be measured may, for example in the form of liquid drops, be provided onto the top surface 5 of the sample carrier 3, e.g. foil, by means of a dispenser means 6. The addition of the sample 4 onto a part of the sample carrier 3, e.g. foil, at the position of the thermal sensor 1 can be accomplished by any known or suitable dispensing technology. The sample 4 may, for example, be a solution comprising enzymes, glucose, maltose, yeast, or may be any other solution comprising soluble species.

In the example illustrated, the sample carrier 3, e.g. foil, is stretched between a take-up roll 7 and a dispensing roll 8. After a measurement is performed, the sample carrier 3, e.g. foil, is driven in a direction as indicated by arrow 9 by a driving means (not shown in the figure). In that way, the sample carrier 3, e.g. foil, is rolled onto the take up roll 7 and rolled off of the dispensing roll 8, hence removing the used part of the sample carrier 3, e.g. foil, away from the thermal sensor 1 and providing a clean part of sample carrier 3, e.g. foil, at the position of the thermal sensor 1. The used sample carrier 3, e.g. foil, that is collected on the take-up roll 7 may then be removed from the take-up roll 7, e.g. after cutting, and thrown away.

It has to be understood that this is only an example. In other embodiments according to the invention, the sample carrier 3, e.g. foil, may be cut before it is applied above or on the top surface of the thermal sensor 1. In this case, the sample carrier 3, e.g. foil, may, for example, be manually applied or may be applied in any other suitable way. In that case, the presence of a take-up roll 7 and a dispensing roll 8 is not required.

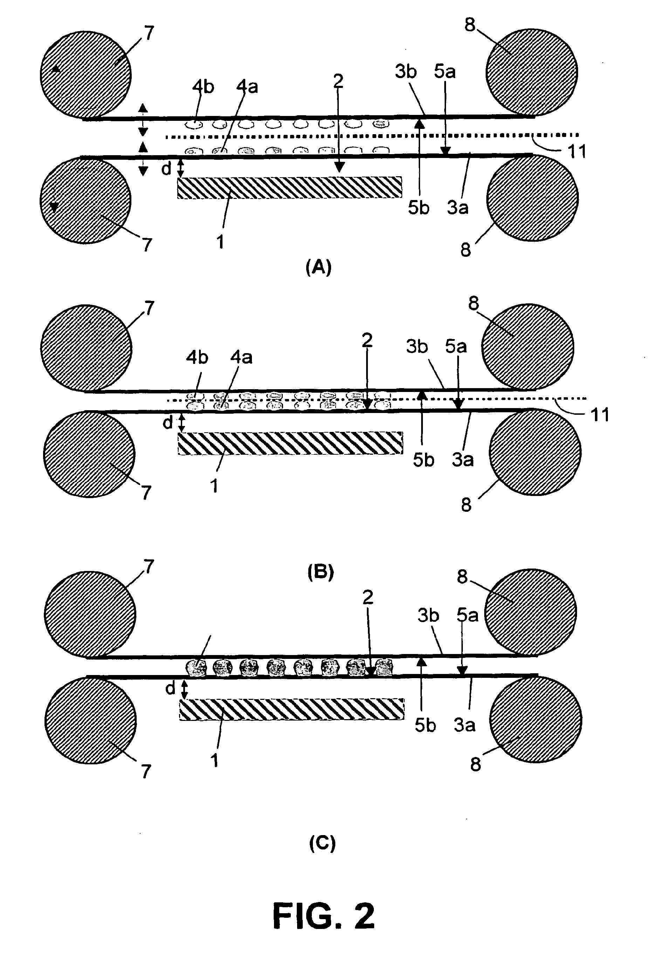

According to embodiments of the invention, samples 4 may be placed between a stack of sample carriers 3, e.g. foils, and these stacks may be such as to allow for partial or full mixing of different species at certain locations and times. In a second embodiment according to the invention, two sample carriers 3a, 3b, e.g. foils, may be used, instead of one as in the first embodiment, on each of which samples 4a, 4b have been dispensed. This is illustrated in Fig. 2.

According to this second embodiment, the thermal sensor system 10 comprises, similar to the thermal sensor system 10 according to the first embodiment, a thermal sensor 1 and a first sample carrier 3a, e.g. foil, with first samples 4a dispensed on its top surface 5a located on or above the top surface 2 of the thermal sensor 1. The first sample carrier 3a, e.g. foil, may, for example, comprise a polymer and may have a thickness of 1 µm or more, 5 µm or more, 10 µm or more, 15 µm or more, 20 µm or more, 50 µm or more, e.g. in the range 1 to 50 µm, or 5 to 50 µm or 10 to 20µm. A suitable thickness of the sample carrier depends on the material used for the sample carrier, and on its thermal characteristics. The thickness of the sample carrier should be such that the thermal path between a sample and the thermal sensor is not substantially changed with respect to when no sample carrier would be present. For example, strong and thin polymer films of variable thickness suitable to be applied with the present invention are described in "Gossamer Spacecraft: membrane and inflatable structures and technology for space applications", C. H. M. Jenkins, American Institute of Aeronautics and Astronautics, vol. 191, 2001. Depending on the application, the distance d between the first sample carrier 3a and the thermal sensor 1 may be varied. The distance d between the first sample carrier 3a, e.g. foil, and the top surface 2 of the thermal sensor 1 may be between 0 and 400 µm, preferably between 0 and 200 µm, more preferably between 0 and 100 µm and most preferably between 0 and 10 µm. In a preferred embodiment and when sensitivity is an important issue, the first sample carrier 3a, e.g. foil, may be in direct contact with the top surface 2 of the thermal sensor 1. The distance d may be determined by the presence or absence of spacers placed on the top surface 2 of the thermal sensor 1 and by the height of the spacers. When no spacers are present on the top surface 2 of the thermal sensor 1, the foil 3 can stick directly to that top surface 2 because of its electrostatic charge.

The thermal sensor system 10 according to the second embodiment furthermore comprises a second sample carrier 3b, e.g. foil, with second samples 4b dispensed on its top surface 5b. The second sample carrier 3b is located with its top surface 5b oriented towards the top surface 5a of the first sample carrier 3a, e.g. foil (see Fig. 2A). According to embodiments of the invention, the first samples 4a and second samples 4b may be the same or may be different. In the case that the first and second samples 4a, 4b are the same, these may be used as blanco or calibration samples. The first and second samples 4a, 4b may, for example, be a solution comprising enzymes, glucose, maltose, yeast, or may be any other solution comprising soluble species. The second sample carrier 3b, e.g. foil, may, for example, comprise a polymer and may have a thickness of 1 µm or more, 5 µm or more, 10 µm or more, 15 µm or more, 20 µm or more, 50 µm or more. A suitable thickness of the second sample carrier 3b depends on the material used for the sample carrier 3b, and on its thermal characteristics. For example, strong and thin polymer films of variable thickness suitable to be applied with the present invention are described in "Gossamer Spacecraft: membrane and inflatable structures and technology for space applications", C. H. M. Jenkins, American Institute of Aeronautics and Astronautics, vol. 191, 2001.

An advantage of a thermal sensor system 10 comprising two sample carriers 3a, 3b positioned as described above is that it allows for the establishing of thermal equilibrium between two samples and it also allows for mixing of two samples before or during measurements are performed.

Optionally, a removable intermediate barrier means, e.g. a removable foil, may be provided in between the first and second sample carrier 3a, 3b, e.g. foil. The removable intermediate barrier means, e.g. foil, may form a semi-permeable membrane to accomplish a partial equilibrium. Semi-permeable membranes may be based on synthetic or natural products and can include woven, non-woven or sheet material. Examples of suitable permeable materials can, for example, be found in "New materials permeable to water vapour", H. Trübel, springer, 1999, in "Diffusion in and through polymers", W.R. Vieth, Hanser, 1991, and in "Biomaterials", S. V. Bhat, Alpha Science, 2002. An advantage of the use of an intermediate foil 11 allows for the establishing of, besides a thermal equilibrium, a chemical equilibrium and allows for partial or full mixing of samples before or while measurements are performed.

The thermal sensor system 10 according to the second embodiment may, for example, be used for partially or completely mixing two samples 4a, 4b. This is further illustrated in Fig. 2B and 2C.

The first sample carrier 3a, e.g. foil, and the second sample carrier 3b, e.g. foil, are brought closer together. This may be obtained e.g. by a driving system (not illustrated) for applying a translational movement to the take-up and dispensing rolls 7, 8. Partial equilibrium can be achieved by letting the first and second samples 4a, 4b come into contact with each other by means of an intermediate barrier means, for example through an intermediate foil 11. In this case, the intermediate foil 11 may be made of a material comprising pores. The pore size and/or other pore characteristics may be chosen so as to allow molecules present in the first and second sample 4a, 4b to reach chemical equilibrium, except for the species to be determined. This means that, in the example given in Fig. 2, the intermediate foil 11 may have a different permeability for different species in the samples 4a, 4b. After chemical equilibrium is established between the first and second samples 4a, 4b, the intermediate foil 11 may be removed in order to allow the species to be measured to come into contact with one another once this partial equilibrium between the other species present in the samples 4a, 4b has been set.

According to the second embodiment, the first and second sample carrier 3a, 3b, e.g. foil, may be provided with a further take up roll 7 and with a further dispensing roll 8. If the semi-permeable film or intermediate barrier means, e.g. foil 11, has to move with the other films, this intermediate barrier means, e.g. foil 11 may also be provided with yet a further a take up roll and yet a further dispensing roll 8 (not shown in the figure).

In Fig. 1 and Fig. 2 the sample carrier 3, 3a, e.g. foil, is positioned above the top surface 2 of the thermal sensor 1. However, in other embodiments, the sample carrier 3, 3a, e.g. foil, may be positioned at the top surface 2 of the thermal sensor 1 and may be in direct contact with that top surface 2. In that case, according to embodiments of the invention, the sample carrier 3, 3a, e.g. foil, may take the shape of structures present on the top surface 2 of the thermal sensor 3, 3a, e.g. foil, or because the relevant shapes have been formed in the sample carrier 3, 3a, e.g. foil, e.g. by deformation of the material. For example, if recipients, wells or reaction vessels are present on the thermal sensor, the sample carrier 3, 3a, e.g. foil, may be put on the sensor in a way that the sample carrier 3, 3a, e.g. foil, takes the shape of the vessels, or in a way that the sample carrier 3, 3a, e.g. foil, comprises shapes which fit into the wells or in a way that the sample carrier 3, 3a, e.g. foil, is spun over the wells.

In Fig. 3 a thermal sensor system 10 according to a third embodiment of the invention is illustrated. The thermal sensor system 10 comprises a thermal sensor 1 comprising thermopiles 12 and a membrane 13. The membrane 13 may have a thickness of, for example, 4 µm. On the top surface 2 of the thermal sensor 1 at least one spacer 14a-e is positioned. The spacers 14a-e may be positioned on the top surface 2 of the thermal sensor 1 such that equal spaces are present in between neighbouring spacers 14a-e. In alternative embodiments, the spacers 14a-e may also be positioned such that non-equal spaces are present in between neighbouring spacers 14a-e. This is the case in the example given in Fig. 3. In this figure, the distance dₛ₁ between spacer 14a and 14b and the distance dₛ₄ between spacer 14d and 14e may, for example, be 4.25 mm, the distance dₛ₂ between spacer 14b and 14c and the distance dₛ₃ between spacer 14c and 14d may, for example, be 2.38 mm. It has to be understood that this is only an example and is not intended to limit the invention. The height h of the spacers 14a-e determines the distance between the sample carrier 3, e.g. foil, and the thermal sensor 1. The at least one spacer 14a-e may have a height h of between 0 and 400 µm. Preferably, the at least on spacer 14a-e may have a height h of between 0 and 200 µm, more preferred the at least one spacer 14a-e may have a height h of between 0 and 100 µm and most preferred the at least one spacer 14a-e may have a height h of between 0 and 10 µm.

On the top surface 15 of the spacers 14a-e a thin sample carrier 3, e.g. foil, is positioned. The sample carrier 3, e.g. foil, may, for example, comprise a polymer and may have a thickness of 1 µm or more, 5 µm or more, 10 µm or more, 15 µm or more, 20 µm or more, 50 µm or more, and may comprise, for example, a polymer. For example, strong and thin polymer films of variable thickness suitable to be applied with the present invention are described in "Gossamer Spacecraft: membrane and inflatable structures and technology for space applications", C. H. M. Jenkins, American Institute of Aeronautics and Astronautics, vol. 191, 2001.

Samples 4 may be dispensed onto the sample carrier 3, e.g. foil, by any suitable dispensing method known by persons skilled in the art. The samples 4 may preferably be located in the spaces in between the spacers 14a-e such that optimal measurement by the thermal sensor 1 can be performed.

In Fig. 4 signals 20 obtained from a thermal sensor system 10 comprising a thermal sensor 12 (type Vivactis MiDiCal chip) and a sample carrier 3, e.g. foil, as illustrated in Fig. 3 are compared with signals 21 obtained from a same thermal sensor 1 (type Vivactis MiDiCal chip) without a sample carrier 3, e.g. foil. From this figure it can be seen that the signal height is reduced to about 50 % of the signal when the sample 4 is put on the sample carrier 3, e.g. foil, at a height of, in the example given, 400 µm above the thermal sensor 1 rather than directly on the thermal sensor 12.

When the height h between the sample carrier 3, e.g. foil, and the thermal sensor 1 is decreased, the loss in sensitivity is decreased as well. Therefore, in accordance with the present invention, the distance d between the sample carrier 3, e.g. foil, and the thermal sensor 1 may be between 0 and 400 µ, preferably the distance between the foil 3 and the thermal sensor 1 may be between 0 and 200 µm, more preferably between 0 and 100 µm and most preferably between 0 and 10 µm.

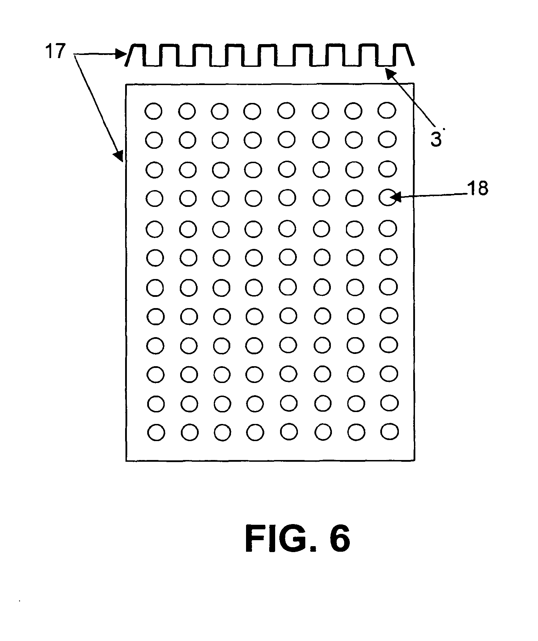

A thermal sensor system 10 according to a further embodiment of the invention is illustrated in Fig. 5. In this example, the thermal sensor 1 comprises a thermopile 12 located on a membrane 13. The thermal sensor system 10 furthermore comprises a sample carrier 3 which in the example illustrated comprises a frame 17, e.g. a Si frame, or a plastic frame, with wells 18, such as e.g. a micro-plate. Such disposable micro-plate is illustrated in Fig. 6. Samples 4 are dispensed in the wells 18 in the frame 17, e.g. micro-plate. An advantage of this embodiment is that samples 4 can be very accurately dispensed onto the thermal sensor system 10.

In the example illustrated, the frame 17 is positioned on the top surface 2 or at a distance d from the top surface 2 of the thermal sensor 1. Depending on the application, the distance d between the sample carrier 3 and the thermal sensor 1 may be varied. The distance d between the sample carrier 3, and the top surface 2 of the thermal sensor 1 may be between 0 and 400 µm, preferably between 0 and 200 µm, more preferably between 0 and 100 µm and most preferably between 0 and 10 µm. In a preferred embodiment and when sensitivity is an important issue, the sample carrier 3, may be in direct contact with the top surface 2 of the thermal sensor 1. The distance d may be determined by the presence or absence of spacers placed on the top surface 2 of the thermal sensor 1 and by the height of the spacers. When no spacers are present on the top surface 2 of the thermal sensor 1, the sample carrier 3, e.g. the wells 18 of the frame 17, will stick directly to the top surface 2. The thermal sensor system 10 according to the present invention has the advantage that it prevents cross-contamination, i.e. as the samples to be measured do not make direct contact with the thermal sensor 1, they cannot contaminate the sensor 1. Therefore, the sensor 1 does not have to be thrown away after a measurement or does not have to be cleaned in between subsequent measurements. This is time saving and cost effective. Therefore, the thermal sensor system 10 according to the present invention is suitable for use in, for example, biomedical or pharmaceutical applications.

It is to be understood that although preferred embodiments, specific constructions and configurations, as well as materials, have been discussed herein for devices according to the present invention, various changes or modifications in form and detail may be made without departing from the scope of this invention as defined by the appended claims.

## Claims

1. A thermal sensor system (10) comprising:
- a thermal sensor (1) having a top surface (2), and
- a first disposable sample carrier (3, 3a), located on or above the top surface (2) of the thermal sensor (1)
**characterised in that** the thermal sensor system (10) furthermore comprises a take-up roll (7) and a dispensing roll (8) for providing a continuous system of providing clean parts and removing used parts of said first disposable sample carrier (3, 3a).

2. A thermal sensor system (10) according to claim 1, there being a distance d between the first disposable sample carrier (3) and the top surface (2) of the thermal sensor (1), wherein the distance d is between 0 and 400 µm.

3. A thermal sensor system (10) according to claim 2, wherein the distance d is between 0 and 200 µm, preferably between 0 and 100 µm and most preferably between 0 and 10 µm.

4. A thermal sensor system (10) according to any of the previous claims, wherein the first disposable sample carrier (3, 3a) is in direct contact with the top surface (2) of the thermal sensor (1).

5. A thermal sensor system (10) according to any of claims 1 to 3, furthermore comprising spacers (14a-e) located in between the top surface (2) of the thermal sensor (1) and the first disposable sample carrier (3, 3a).

6. A thermal sensor according to claim 5, the spacers (14a-e) having a height h, wherein the height h determines the distance d between the first disposable sample carrier (3, 3a) and the top surface (2) of the thermal sensor (1).

7. A thermal sensor system (10) according to any of the previous claims, the first disposable sample carrier (3a) having a top surface (5a), wherein the thermal sensor system (10) furthermore comprises a second disposable sample carrier (3b) having a top surface (5b) and being located with its top surface (5b) toward the top surface (5a) of the first disposable sample carrier (3a).

8. A thermal sensor system (10) according to claim 7, furthermore comprising an intermediate barrier means (11) in between the first disposable sample carrier (3a) and the second disposable sample carrier (3b).

9. A thermal sensor system (10) according to any of the previous claims, wherein the thermal sensor system (10) furthermore comprises a dispenser system (6) for dispensing samples (4) onto the top surface (5, 5a) of the first disposable sample carrier (3, 3a) and/or second disposable sample carrier (3b).

## Patentansprüche

1. Thermosensorsystem (10) mit:
- einem Thermosensor (1) mit einer Oberseite (2), und
- einem ersten Einwegprobenträger (3, 3a), welcher sich auf oder über der Oberseite (2) des Thermosensors (1) befindet,
**dadurch gekennzeichnet, dass** das Thermosensorsystem (10) zudem eine Aufnahmewalze (7) und eine Abgabewalze (8) zum Liefern eines kontinuierlichen Systems zum Liefern von sauberen Teilen und Entfernen von verwendeten Teilen des ersten Einwegprobenträgers (3, 3a) aufweist.

2. Thermosensorsystem (10) nach Anspruch 1, wobei zwischen dem ersten Einwegprobenträger (3) und der Oberseite (2) des Thermosensors (1) ein Abstand d besteht, wobei der Abstand d zwischen 0 und 400 µm beträgt.

3. Thermosensorsystem (10) nach Anspruch 2, wobei der Abstand d zwischen 0 und 200 µm, vorzugsweise zwischen 0 und 100 µm und am bevorzugtesten zwischen 0 und 10 µm beträgt.

4. Thermosensorsystem (10) nach einem der vorangehenden Ansprüche, wobei sich der erste Einwegprobenträger (3, 3a) in direktem Kontakt mit der Oberseite (2) des Thermosensors (1) befindet.

5. Thermosensorsystem (10) nach einem der Ansprüche 1 bis 3, welches zudem Abstandshalter (14a-e) aufweist, welche sich zwischen der Oberseite (2) des Thermosensors (1) und dem ersten Einwegprobenträger (3, 3a) befinden.

6. Thermosensor nach Anspruch 5, wobei die Abstandshalter (14a-e) eine Höhe h aufweisen, wobei die Höhe h den Abstand d zwischen dem ersten Einwegprobenträger (3, 3a) und der Oberseite (2) des Thermosensors (1) bestimmt.

7. Thermosensorsystem (10) nach einem der vorangehenden Ansprüche, wobei der erste Einwegprobenträger (3a) eine Oberseite (5a) aufweist, wobei das Thermosensorsystem (10) zudem einen zweiten Einwegprobenträger (3b) mit einer Oberseite (5b) aufweist, welcher mit der Oberseite (5b) desselben zur Oberseite (5a) des ersten Einwegprobenträgers (3a) angeordnet ist.

8. Thermosensorsystem (10) nach Anspruch 7, welches zwischen dem ersten Einwegprobenträger (3a) und dem zweiten Einwegprobenträger (3b) zudem eine dazwischen liegende Sperreinrichtung (11) aufweist.

9. Thermosensorsystem (10) nach einem der vorangehenden Ansprüche, wobei das Thermosensorsystem (10) zudem ein Abgabesystem (6) zum Abgeben von Proben (4) auf die Oberseite (5, 5a) des ersten Einwegprobenträgers (3, 3a) und/oder zweiten Einwegprobenträgers (3b) aufweist.

## Revendications

1. Système de capteur thermique (10) comprenant :
- un capteur thermique (1) ayant une surface supérieure (2), et
- un premier porte-échantillon jetable (3, 3a), situé sur ou au-dessus de la surface supérieure (2) du capteur thermique (1),
**caractérisé en ce que** le système de capteur thermique (10) comprend en outre un rouleau récepteur (7) et un rouleau distributeur (8) pour réaliser un système continu de fourniture d'éléments propres et d'enlèvement d'éléments usagés dudit premier porte-échantillon jetable (3, 3a).

2. Système de capteur thermique (10) selon la revendication 1, une distance d existant entre le premier porte-échantillon jetable (3) et la surface supérieure (2) du capteur thermique (1), dans lequel la distance d est comprise entre 0 et 400 µm.

3. Système de capteur thermique (10) selon la revendication 2, dans lequel la distance d est comprise entre 0 et 200 µm, de préférence entre 0 et 100 µm, et encore mieux entre 0 et 10 µm.

4. Système de capteur thermique (10) selon l'une quelconque des revendications précédentes, dans lequel le premier porte-échantillon jetable (3, 3a) est en contact direct avec la surface supérieure (2) du capteur thermique (1).

5. Système de capteur thermique (10) selon l'une quelconque des revendications 1 à 3, comprenant en outre des pièces d'écartement (14a-e) situées entre la surface supérieure (2) du capteur thermique (1) et le premier porte-échantillon jetable (3, 3a).

6. Capteur thermique selon la revendication 5, les pièces d'écartement (14a-e) ayant une hauteur h, dans lesquelles la hauteur h détermine la distance d entre le premier porte-échantillon jetable (3, 3a) et la surface supérieure (2) du capteur thermique (1).

7. Système de capteur thermique (10) selon l'une quelconque des revendications précédentes, le premier porte-échantillon jetable (3a) ayant une surface supérieure (5a), dans lequel le système de capteur thermique (10) comprend en outre un second porte-échantillon jetable (3b) ayant une surface supérieure (5b) et étant situé avec sa surface supérieure (5b) vers la surface supérieure (5a) du premier porte-échantillon jetable (3a).

8. Système de capteur thermique (10) selon la revendication 7, comprenant en outre un moyen formant barrière intermédiaire (11) entre le premier porte-échantillon jetable (3a) et le second porte-échantillon jetable (3b).

9. Système de capteur thermique (10) selon l'une quelconque des revendications précédentes, dans lequel le système de capteur thermique (10) comprend en outre un système distributeur (6) pour distribuer des échantillons (4) sur la surface supérieure (5, 5a) du premier porte-échantillon jetable (3, 3a) et/ou du second porte-échantillon jetable (3b).
